(19) Europäisches Patentamt
European Patent Office
Office européen des brevets

(11) EP 3 460 391 A1

(12) **EUROPEAN PATENT APPLICATION**
published in accordance with Art. 153(4) EPC

(43) Date of publication:
27.03.2019 Bulletin 2019/13

(51) Int Cl.:
G01C 3/06 (2006.01)     G06T 1/00 (2006.01)

(21) Application number: 17799108.0

(22) Date of filing: 20.04.2017

(86) International application number:
PCT/JP2017/015848

(87) International publication number:
WO 2017/199676 (23.11.2017 Gazette 2017/47)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 16.05.2016 JP 2016097574

(71) Applicant: Hitachi Automotive Systems, Ltd.
Hitachinaka-shi, Ibaraki 312-8503 (JP)

(72) Inventors:
• MATSUO, Shigeru
Tokyo 100-8280 (JP)
• OSATO, Takuma
Tokyo 100-8280 (JP)
• NAGASAKI, Takeshi
Hitachinaka-shi, Ibaraki 312-8503 (JP)

(74) Representative: MERH-IP Matias Erny Reichl
Hoffmann
Patentanwälte PartG mbB
Paul-Heyse-Strasse 29
80336 München (DE)

(54) **STEREO CAMERA DEVICE**

(57) The purpose of the present invention is to suppress processing load and cost increase even if the search width of stereo matching determination processing is broadened. The present invention is a stereo camera device having a plurality of cameras, wherein the stereo camera device has a searching processing unit 30 for searching for an image element corresponding to a specific image element within a standard image photographed by one camera from among a plurality of cameras while changing a pixel position across a prescribed searching range within a comparison image photographed by another camera, and the searching of the searching processing unit 30 excludes the positions of some of the pixels from among the pixels included in the searching range.

FIG. 1

**Description**

Technical Field

The present invention relates to a stereo camera device for recognizing an obstacle outside a vehicle, using a plurality of cameras.

Background Art

To improve driving safety of vehicles, systems of detecting an obstacle ahead with a camera mounted on a vehicle, and issuing an alarm to a driver or automatically putting a brake when there is a possibility of collision with the obstacle have been studied.

Examples of a sensor that monitors the front of the vehicle includes a millimeter wave radar, a laser radar, and a camera. Types of the camera include a monocular camera and a stereo camera using a plurality of cameras. The stereo camera can measure a distance to a photographed object, using a disparity of an overlapping region photographed by two cameras at a prescribed interval. Therefore, the stereo camera can accurately grasp collision risk to the object ahead.

The stereo camera obtains the disparity of images photographed by the two cameras and converts the disparity into the distance. To obtain the disparity, matching determination of the images between the two cameras needs to be performed. In the matching determination, a search width of matching processing is defined, and determination processing is performed within the search width. Therefore, a maximum value of the disparity is determined by the search width. Since the stereo camera indicates a shorter distance as the disparity is larger, a shortest measurement distance measurable by the stereo camera is determined by the search width. If the search width is broadened to measure a short distance, the calculation amount of the matching determination processing becomes enormous, which leads to system performance deterioration or high system cost.

Therefore, as a method for enabling short distance measurement while preventing an increase in the calculation amount, the methods of PTL 1 and PTL 2 have been proposed.

Citation List

Patent Literature

PTL 1: JP 2008-39491 A
PTL 2: JP 2013-174494 A

Summary of Invention

Technical Problem

In PTL 1, an image is reduced and stereo matching determination processing is performed again in the case of measuring a short distance, in addition to stereo matching determination being performed for images photographed by left and right cameras at the same magnification. According to the method, a function to reduce the image, a function to manage calculation parameters of the matching determination for both the reduced image and the images at the same magnification, and the like, are necessary, which leads to the cost increase.

PTL 2 describes a method of narrowing a search width on an upper side of an image photographed through a front vehicle window if no obstacles are detected on a lower side of the image, using the fact that distant scenery such as the sky is often photographed on the upper side of the image and a road surface at short distance is often photographed on the lower side of the image. However, in this method, the search width on the upper side of the image needs to be broadened in the case of photographing a forward vehicle, and there is a problem that scenes to which this method can be applied are limited.

The purpose of the present invention is to suppress processing load and cost increase even if a search width of stereo matching determination processing is broadened.

Solution to Problem

The present invention is a stereo camera device having a plurality of cameras, the stereo camera device including a searching processing unit configured to search, for an image element corresponding to a specific image element within a standard image photographed by one of the plurality of cameras, a comparison image photographed by another camera across a prescribed searching range while changing a pixel position, wherein the searching processing unit performs the search excluding a part of pixel positions of pixels included in the searching range.

Characteristics of the present invention for solving the above problem are as follows, for example. Included is the searching processing unit configured to search, for an image element corresponding to a specific image element within a standard image photographed by one of the plurality of cameras, a comparison image photographed by another camera across a prescribed searching range while changing a pixel position, and the searching processing unit performs the search excluding a part of pixel positions of pixels included in the searching range.

Advantageous Effects of Invention

According to the present invention, processing load and cost increase can be suppressed even if a search width of stereo matching determination processing is broadened.

Brief Description of Drawings

FIG. 1 is a functional block diagram of a stereo camera device.
FIG. 2 is an explanatory diagram of disparity calculation in a stereo camera.
FIG. 3 is a diagram illustrating a difference in disparity between an object at distant and an object at short distance.
FIG. 4 is a diagram illustrating a relationship between disparity and distance.
FIG. 5 is a diagram illustrating distance and measurement accuracy.
FIG. 6 is an explanatory diagram of comparison position skipping of a comparison image in matching determination processing.
FIG. 7 is a flowchart of stereo matching determination processing.
FIG. 8 is a diagram illustrating distance measurement accuracy in a case where the comparison image position is skipped.
FIG. 9 is a block diagram for performing matching determination processing having a distant portion and a short-distance portion in parallel.

Description of Embodiments

A stereo camera device according to the present embodiment is a stereo camera device having a plurality of cameras, the stereo camera device including a searching processing unit 30 configured to search, for an image element corresponding to a specific image element within a standard image photographed by one of the plurality of cameras, a comparison image photographed by another camera across a prescribed searching range while changing a pixel position, wherein the searching processing unit 30 performs the search excluding a part of pixel positions of pixels included in the searching range.

According to the stereo camera device, a searching position of the comparison image for stereo matching determination processing is skipped in the middle of searching. Therefore, an increase in the number of times of calculation of the matching determination processing can be suppressed even if the search width is broadened. Therefore, an increase in a calculation amount can be suppressed even if the search width of a stereo camera is broadened for short-distance measurement, and the cost increase can also be suppressed.

Hereinafter, embodiments of the present invention will be described with reference to the drawings. The following description shows specific examples of the contents of the present invention, and the present invention is not limited to the description. Various changes and modifications can be made by a person skilled in the art within the scope of the technical idea disclosed in the present specification. Further, in all the drawings for describing the present invention, parts having the same function are denoted by the same reference numeral, and repetitive description of the parts may be omitted.

First Embodiment

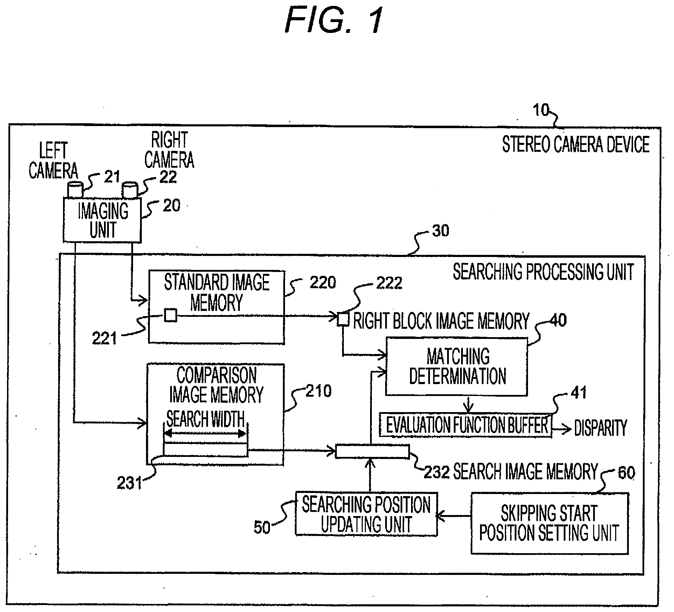

FIG. 1 illustrates a block diagram of a stereo camera device 10. The stereo camera device 10 includes an imaging unit 20 and a searching processing unit 30. As the imaging unit 20, two cameras including a right camera 22 and a left camera 21 are included. An image photographed by the right camera 22 is stored in a standard image memory 220 as a standard image. An image photographed by the left camera 21 is stored in a comparison image memory 210 as a comparison image. A standard block image 221 such as 8 pixels × 8 pixels is defined from the standard image memory 220 and is stored in a right block image memory 222. The size of the block image is not limited to this example. In the meanwhile, in the comparison image memory 210, an image by search width 231 is selected with reference to a vertical position (Y coordinate) and a horizontal position (X coordinate) that are the same as the standard image 221, and is stored in a search image memory 232. Thereafter, in matching determination 40, a difference of image data of the right block image memory 222 from the image block extracted from the search image memory 232 is calculated. This difference calculation is called SAD and the following calculation is performed.
(Equation 1)

$$SAD = \Sigma\Sigma |I(i, j) - T(i, j)| \ \dots \ (1)$$

Here, I is the 8 × 8 image block in the search image memory 232, T is the image data of the right block image memory 222, and i and j are coordinates in the image block. The comparison position for extracting the image block from the search image memory 232 is updated in a searching position updating unit 50 every time the difference calculation is performed. Normally, the searching position updating unit 50 updates one comparison position at a time. Then, when the comparison position becomes equal to or larger than a value specified by a skipping start position setting unit 60, the searching position updating unit 50 updates two comparison positions at a time.

The SAD calculation result is stored in the evaluation function buffer 41 together with the comparison position of the search image memory 232. When the SAD calculation is completed up to the end of the search image memory 232, the comparison position having the smallest difference in the evaluation function buffer 41 is output as a disparity. This example has been described on the assumption that the search width is 128. However, the search width is not limited to the numerical value.

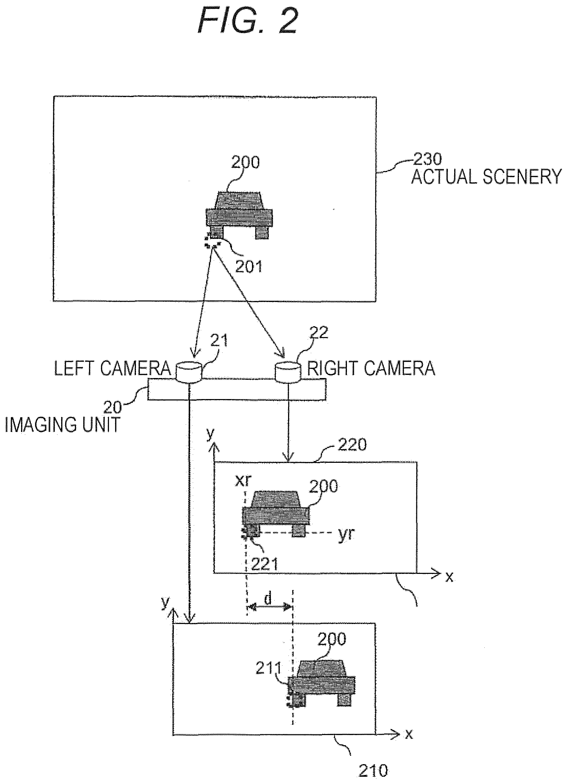

In FIG. 2, an outline of operation in which the stereo camera device 10 generates disparity data will be described. Actual scenery 230 viewed through the front window of the vehicle on which the stereo camera device 10 is mounted includes a forward vehicle 200. When there is a right image 220 photographed by the right camera 22 and a left image 210 photographed by the left camera 21, a part 201 of the forward vehicle 200 is photographed at a position 221 in the right image 220 and is photographed at a position 211 in the left image 210. As a result, a disparity d is caused between the position of the standard block image 221 and a comparison block image 211. This disparity d is a large value when the forward vehicle 200 is close to the stereo camera device 10 and is a small value when the forward vehicle 200 is distant. The disparity obtained in this manner is obtained in the entire image. The distance to the stereo camera device 10 can be measured using the disparity d according to the principle of triangulation. A distance Z can be obtained from the disparity d by the following equation.
(Equation 2)

$$Z = (f \times B)/d \ \dots \ (2)$$

Here, f is a focal length of the right and left cameras, and B is a distance (baseline length) between the right camera 22 and the left camera 21. Further, to three-dimensionally convert the disparity data, three-dimensional distances in X and Y directions on the point at which the Z is obtained are expressed by the following equations.
(Equation 3)

$$X = (Z \times xr)/f \ \dots \ (3)$$

(Equation 4)

$$Y = (Z \times yr)/f \ \dots \ (4)$$

Here, xr is an x coordinate on the right image 220 and y r is a y coordinate on the right image 220. As described above, the position (X, Y, Z) of an object in the three-dimensional space can be obtained with the image photographed by the stereo camera device 10 according to the distance from the stereo camera device 10.

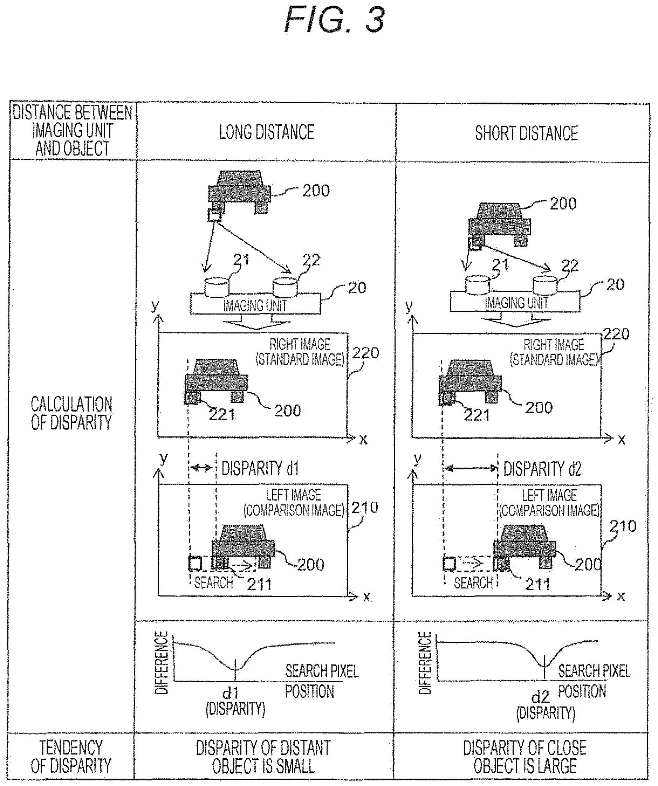

FIG. 3 summarizes the tendency of disparity values due to a difference in distance between an object (here, the forward vehicle 200) and the photographing unit 20. In the case where the distance between the forward vehicle 200 and the imaging unit 20 is long, the difference between the position in the X direction of the forward vehicle 200 on the standard image 220 and the position of the forward vehicle 200 in the X direction on the comparison image 210 is large. In other words, the disparity is large. On the other hand, in the case where the distance between the forward vehicle 200 and the imaging unit 20 is short, the difference between the position in the X direction of the forward vehicle 200 on the standard image 220 and the position of the forward vehicle 200 in the X direction on the comparison image 210 is small. In other words, the disparity is small.

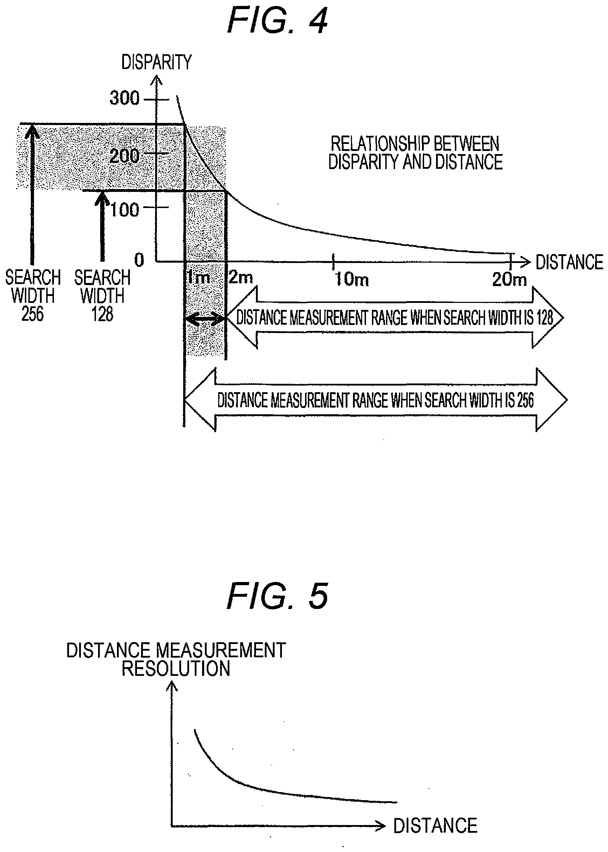

FIG. 4 is a graph illustrating a relationship between the disparity and the distance. Since the distance is inversely proportional to the disparity according to the equation (2), the increase in disparity becomes remarkable in a short-distance portion. Assuming that the distance of 2 m and beyond 2 m can be measured at the disparity of 127 in the example of the search width of 128, the search width needs to be expanded double in the case of expanding the measurable distance to 1 m. When the search width is expanded, the calculation amount for obtaining the disparity of the entire image becomes enormous.

FIG. 5 illustrates disparity measurement resolution with respect to the difference in distance. As illustrated in FIG. 4 as the relationship between disparity and distance, the disparity is in inverse proportion to the distance. For this reason, the resolution becomes extremely higher in the short-distance portion than the distant portion. That is, since the resolution is high in the short-distance portion, even if the searching position updating unit 50 skips and updates the comparison positions of the distant portion, and the distance measurement resolution of the entire system is not decreased.

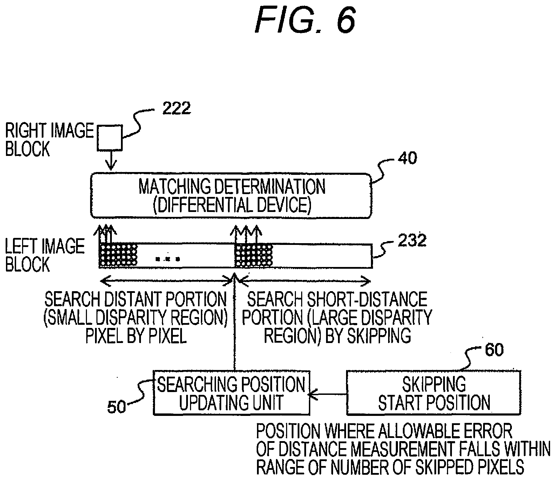

FIG. 6 illustrates a concept of values set to the skipping start position setting unit 60. Assuming that the comparison position of the search image memory 232 is updated from a portion with a small disparity to a portion with a large disparity. That is, the search image memory 232 is searched from a distant portion to a short-distance portion. If the position specified by the skipping start position setting unit 60 is set to the position where the distance measurement accuracy is maintained, the measurement accuracy of the entire system is not decreased even if two comparison positions are updated at a time. Moreover, even if the search width is expanded from 128 to 256, the calculation amount is not doubled, and the calculation amount can be suppressed by the amount of skipping.

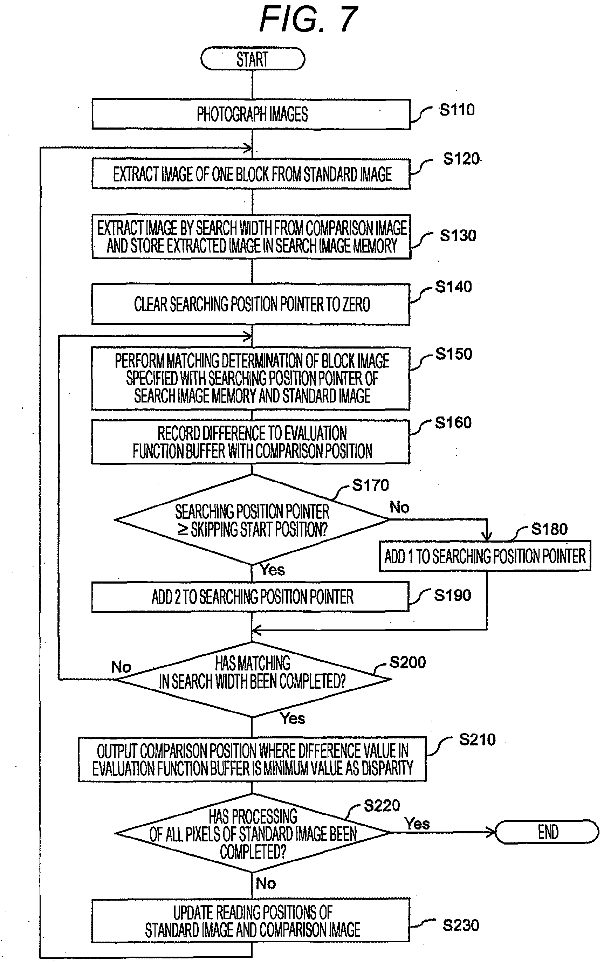

FIG. 7 illustrates a flowchart for calculating the disparity. First, the right camera 22 and the left camera 21 of the photographing unit 20 photograph images of scenery in front of the vehicle (S110). Next, data of one block (8 × 8 pixels in this example) is extracted from the standard image memory 220 and stored in the right block image memory 220 (S120). Next, image data is extracted from the comparison image memory 210 by the search width from the same Y and X coordinate positions as the block image and stored in the search image memory 232 (S130). Next, the searching position pointer that refers to the search image memory 232 is cleared to zero (S140). Thereafter, a block image specified by a searching position pointer is extracted from the search image memory 232, and the difference calculation with the right block image memory 222 is performed by the matching determination 40 (S150).

The difference value is stored in the evaluation function buffer 41 together with the comparison position (S160). Whether the searching position pointer is equal to or larger than the value set in the skipping start position setting unit 60 (S170). In the case of Yes, 2 is added to the searching position pointer (S190). Note that the numerical value to be added is not limited to 2. In the case of No, 1 is added to the searching position pointer (S180). When the searching position pointer is within the search width, the flow returns to S150. When the searching position pointer becomes the search width or more, the comparison position having the smallest difference value in the evaluation function buffer 41 is output as the disparity (S210). Whether all the processing in the standard image memory 220 has been completed is determined (S220), and when the processing has not been completed, reading positions of the standard image memory 220 and the comparison image memory 210 are updated and the flow returns to S120 (S230).

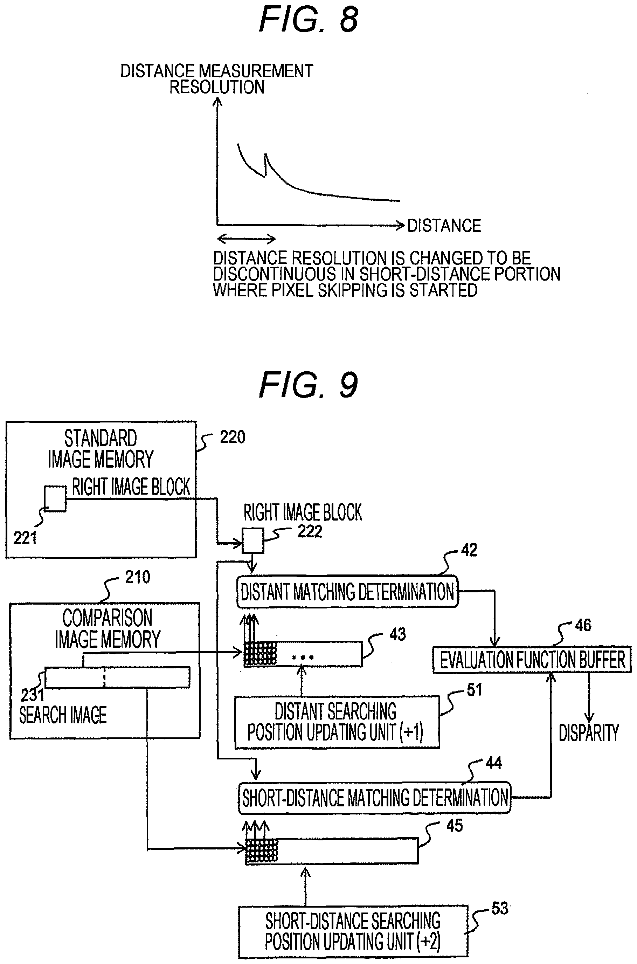

FIG. 8 is a graph illustrating disparity distance measurement resolution when processing is performed according to the above-described flow. The resolution of the portion where the comparison position of the comparison image memory is skipped becomes discontinuous with the resolution of the portion where no skipping is performed in the short-distance portion. However, the resolution of the short-distance portion is higher than the resolution of a long-distance portion, and thus the resolution of the entire system is not decreased.

Second Embodiment

FIG. 9 illustrates matching determination processing that enables parallel processing for a short-distance portion and a distant portion. Therefore, unlike FIG. 1, distant matching determination 42 for performing matching determination of a distant portion, a distant search image memory 43, and a searching position updating unit 51 are included. The distant searching position updating unit 51 updates a comparison pointer by one at a time. Further, short-distance matching determination 44 for performing matching determination of a short-distance portion, a short-distance search image memory 44, and a short-distance searching position updating unit 53 are included. The short-distance searching position updating unit 53 updates the comparison pointer by two at a time, using a value of a width of a distant search image memory as an initial value. Results of the matching determination are stored in an evaluation function buffer 46, and a comparison position having the smallest portion in difference is output as a disparity. With such a configuration, even if a search width of the short-distance search image memory 44 is set to double a value of the distant search image memory 43, both of the distant search image memory 43 and the short-distance search image memory 44 can be completed at the same time. Therefore, even if the search width of the short-distance portion is expanded, processing time of the entire system can be increased.

According to the above embodiment, in the matching determination processing of disparity calculation in a stereo camera, searching processing is performed by skipping one pixel from the middle of the searching processing. Therefore, even if the search width is expanded, an increase in a calculation amount can be prevented.

Note that the stereo camera device according to the present invention is not limited to the contents described in the above embodiments. In other words, the searching processing unit may search pixels included in the searching range, excluding a part of pixel positions. Specifically, the searching processing unit may search a large disparity region in the searching range, with larger density than a small disparity region. This processing is effective when the large disparity region needs to be searched with higher accuracy than the small disparity region, such as a case where an obstacle does not exist in the distance and does exist only in the vicinity.

Reference Signs List

    10 stereo camera device
    20 photographing unit
    21 left camera
    22 right camera
    30 searching processing unit
    40 matching determination
    41 evaluation function buffer
    50 searching position updating unit
    60 skipping start position setting unit
    200 forward vehicle
    210 comparison image memory
    211 comparison block image
    220 standard image memory
    221 standard block image
    222 right block image memory
    231 image by search width

**Claims**

1. A stereo camera device having a plurality of cameras, the stereo camera device comprising
a searching processing unit configured to search, for an image element corresponding to a specific image element within a standard image photographed by one of the plurality of cameras, a comparison image photographed by another camera across a prescribed searching range while changing a pixel position, wherein
the searching processing unit performs the searching excluding a part of pixel positions of pixels included in the searching range.

2. The stereo camera device according to claim 1, wherein
a large disparity region on a side where the disparity is large, of the searching range, is configured to be searched with smaller density than a small disparity region on a side where the disparity is small, of the searching range.

3. The stereo camera device according to claim 1, wherein
the searching processing unit is configured to search, in the small disparity region, all of pixel positions included in the small disparity region, and configured to skip at least one pixel position and search, in the large disparity region, a plurality of pixel positions included in the large disparity region.

4. The stereo camera device according to claim 1, wherein
the searching processing unit includes

    first searching means configured to search part of the comparison image within a search width, for the specific image element within the standard image, and
second searching means configured to search the remaining comparison image within the search width, for the specific image element within the standard image, and

an update amount of the pixel position within the comparison image is different between the first searching means and the second searching means.

# FIG. 1

# FIG. 2

# FIG. 3

| DISTANCE BETWEEN IMAGING UNIT AND OBJECT | LONG DISTANCE | SHORT DISTANCE |
|---|---|---|
| CALCULATION OF DISPARITY | | |
| TENDENCY OF DISPARITY | DISPARITY OF DISTANT OBJECT IS SMALL | DISPARITY OF CLOSE OBJECT IS LARGE |

# FIG. 4

DISPARITY

RELATIONSHIP BETWEEN
DISPARITY AND DISTANCE

300

200

100

0

DISTANCE

1m 2m 10m 20m

SEARCH WIDTH 256   SEARCH WIDTH 128

DISTANCE MEASUREMENT RANGE WHEN SEARCH WIDTH IS 128

DISTANCE MEASUREMENT RANGE WHEN SEARCH WIDTH IS 256

# FIG. 5

DISTANCE MEASUREMENT
RESOLUTION

DISTANCE

# FIG. 6

RIGHT IMAGE BLOCK ⌐ 222

┌─────────────────────────────────┐ ⌐ 40
│   MATCHING DETERMINATION        │
│     (DIFFERENTIAL DEVICE)        │
└─────────────────────────────────┘

LEFT IMAGE BLOCK ⌐ 232

SEARCH DISTANT PORTION
(SMALL DISPARITY REGION)
PIXEL BY PIXEL

SEARCH SHORT-DISTANCE
PORTION (LARGE DISPARITY
REGION) BY SKIPPING

┌─────────────────────┐        ┌─────────────────────┐ ⌐ 60
│ SEARCHING POSITION  │        │      SKIPPING        │
│   UPDATING UNIT     │        │   START POSITION     │
└─────────────────────┘        └─────────────────────┘
50

POSITION WHERE ALLOWABLE ERROR
OF DISTANCE MEASUREMENT FALLS WITHIN
RANGE OF NUMBER OF SKIPPED PIXELS

# FIG. 7

```
┌──────────────┐
│    START     │
└──────┬───────┘
       │
┌──────────────────────────────────────────────┐
│            PHOTOGRAPH IMAGES                   │ ⟋ S110
└──────┬───────────────────────────────────────┘
       │
┌──────────────────────────────────────────────┐
│ EXTRACT IMAGE OF ONE BLOCK FROM STANDARD IMAGE │ ⟋ S120
└──────┬───────────────────────────────────────┘
       │
┌──────────────────────────────────────────────┐
│ EXTRACT IMAGE BY SEARCH WIDTH FROM COMPARISON  │ ⟋ S130
│ IMAGE AND STORE EXTRACTED IMAGE IN SEARCH      │
│ IMAGE MEMORY                                    │
└──────┬───────────────────────────────────────┘
       │
┌──────────────────────────────────────────────┐
│    CLEAR SEARCHING POSITION POINTER TO ZERO    │ ⟋ S140
└──────┬───────────────────────────────────────┘
       │
┌──────────────────────────────────────────────┐
│ PERFORM MATCHING DETERMINATION OF BLOCK IMAGE  │ ⟋ S150
│ SPECIFIED WITH SEARCHING POSITION POINTER OF   │
│ SEARCH IMAGE MEMORY AND STANDARD IMAGE         │
└──────┬───────────────────────────────────────┘
       │
┌──────────────────────────────────────────────┐
│ RECORD DIFFERENCE TO EVALUATION FUNCTION       │ ⟋ S160
│ BUFFER WITH COMPARISON POSITION                │
└──────┬───────────────────────────────────────┘
       │
      ╱╲  S170
     ╱  ╲
    ╱ SEARCHING POSITION ╲  No
   ╱ POINTER ≥ SKIPPING    ╲──────→ ┌─────────────────────────────┐
   ╲ START POSITION?       ╱        │ ADD 1 TO SEARCHING          │ ⟋ S180
    ╲                     ╱         │ POSITION POINTER            │
     ╲                   ╱          └──────────┬──────────────────┘
      ╲╱                                       │
       │ Yes                                   │
┌──────────────────────────────────────┐       │
│ ADD 2 TO SEARCHING POSITION POINTER   │ ⟋ S190 │
└──────┬───────────────────────────────┘       │
       │←──────────────────────────────────────┘
      ╱╲  S200
  No ╱  ╲
 ←──╱ HAS MATCHING IN     ╲
    ╲ SEARCH WIDTH BEEN   ╱
     ╲ COMPLETED?        ╱
      ╲╱
       │ Yes
┌──────────────────────────────────────────────┐
│ OUTPUT COMPARISON POSITION WHERE DIFFERENCE    │ ⟋ S210
│ VALUE IN EVALUATION FUNCTION BUFFER IS         │
│ MINIMUM VALUE AS DISPARITY                      │
└──────┬───────────────────────────────────────┘
       │
      ╱╲  S220
     ╱  ╲                          Yes   ┌─────────┐
    ╱ HAS PROCESSING OF  ╲───────────────→│   END   │
    ╲ ALL PIXELS OF      ╱               └─────────┘
     ╲ STANDARD IMAGE   ╱
      ╲ BEEN COMPLETED?╱
       ╲╱
       │ No
┌──────────────────────────────────────────────┐
│ UPDATE READING POSITIONS OF STANDARD IMAGE     │ ⟋ S230
│ AND COMPARISON IMAGE                            │
└──────────────────────────────────────────────┘
```

# FIG. 8

DISTANCE MEASUREMENT
RESOLUTION

→DISTANCE

DISTANCE RESOLUTION IS CHANGED TO BE
DISCONTINUOUS IN SHORT-DISTANCE PORTION
WHERE PIXEL SKIPPING IS STARTED

# FIG. 9

STANDARD
IMAGE MEMORY — 220

RIGHT IMAGE BLOCK

221

RIGHT IMAGE BLOCK — 222

— 210

COMPARISON
IMAGE MEMORY

231
SEARCH IMAGE

DISTANT MATCHING DETERMINATION — 42

— 43

EVALUATION FUNCTION BUFFER — 46

DISTANT SEARCHING
POSITION UPDATING UNIT (+1) — 51

DISPARITY

SHORT-DISTANCE MATCHING DETERMINATION — 44

— 45

SHORT-DISTANCE SEARCHING
POSITION UPDATING UNIT (+2) — 53

14

## INTERNATIONAL SEARCH REPORT

| International application No. |
| --- |
| PCT/JP2017/015848 |

A. CLASSIFICATION OF SUBJECT MATTER

*G01C3/06*(2006.01)i, *G06T1/00*(2006.01)i

According to International Patent Classification (IPC) or to both national classification and IPC

B. FIELDS SEARCHED

Minimum documentation searched (classification system followed by classification symbols)
G01C3/00-3/32, G06T1/00-1/40, G06T3/00-5/50, G06T9/00-9/40

Documentation searched other than minimum documentation to the extent that such documents are included in the fields searched
Jitsuyo Shinan Koho          1922–1996     Jitsuyo Shinan Toroku Koho    1996–2017
Kokai Jitsuyo Shinan Koho    1971–2017     Toroku Jitsuyo Shinan Koho    1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2015-179063 A (Ricoh Co., Ltd.), 08 October 2015 (08.10.2015), paragraphs [0004] to [0007], [0011], [0018] to [0022], [0054] to [0062], [0092]; fig. 3, 11 & US 2015/0248594 A1 paragraphs [0007] to [0010], [0036] to [0049], [0082] to [0090], [0132], [0133]; fig. 3, 11 & EP 2924655 A2 | 1-4 |
| P,X | WO 2017/017963 A1 (Kyocera Corp.), 02 February 2017 (02.02.2017), paragraphs [0052], [0057], [0058]; fig. 6, 8 (Family: none) | 1-4 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25 July 2017 (25.07.17) | 08 August 2017 (08.08.17) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008039491 A
- JP 2013174494 A